(19) Europäisches Patentamt
European Patent Office
Office européen des brevets

(11) Publication number: 0 089 310
B1

# (12) EUROPEAN PATENT SPECIFICATION

(45) Date of publication of patent specification: 24.09.86

(51) Int. Cl.$^4$: C 10 G 47/22

(21) Application number: 83730027.6

(22) Date of filing: 08.03.83

## (54) Thermal cracking method for preparing olefins from hydrocarbons.

(30) Priority: 11.03.82 JP 38684/82

(43) Date of publication of application:
21.09.83 Bulletin 83/38

(45) Publication of the grant of the patent:
24.09.86 Bulletin 86/39

(84) Designated Contracting States:
DE FR GB IT

(56) References cited:
FR-A-1 494 497
US-A-3 842 138

I.E.C. PRODUCT RESEARCH AND DEVELOPMENT, vol. 20, no. 4, December 1981, pages 746-752, Washington, U.S.A., M. TANIEWSKI et al.: "Hydropyrolysis of hydrocarbons"

(73) Proprietor: MITSUBISHI JUKOGYO KABUSHIKI KAISHA
5-1, Marunouchi 2-chome Chiyoda-ku
Tokyo (JP)

(72) Inventor: Kamimura, Yoshihiko
c/o Mitsubishi Jukogyo Kabushiki Kaisha
5-1, Marunouchi 2-chome,Chiyoda-ku,Tokyo (JP)
Inventor: Okamoto, Toshiro
c/o Mitsubishi Jukogyo Kabushiki Kaisha
5-1, Marunouchi 2-chome,Chiyoda-ku,Tokyo (JP)
Inventor: Takahashi, Naoyuki, c/o Hiroshima Technical Inst.
Mitsubishi Jukogyo K.K.,6-22, Kanonshin-machi 4-chome,Nishi-ku,Hiroshima,Hiroshima (JP)
Inventor: Makihara, Hiroshi, c/o Hiroshima Technical Inst.
Mitsubishi Jukogyo K. K.,6-22, Kanonshin-machi 4-chome,Nishi-ku,Hiroshima (JP)
Inventor: Oshima, Michio, c/o Hiroshima Technical Inst.
Mitsubishi Jukogyo K. K., 6-22, Kanonshin-machi
4-chome,Nishi-ku,Hiroshima (JP)

EP 0 089 310 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(74) Representative: **Meissner, Peter E., Dipl.-Ing. et al**
**Herbertstrasse 22**
**D-1000 Berlin 33 (DE)**

## Description

The present invention relates to a method for producing olefins, particularly ethylene and propylene, by a thermal cracking of hydrocarbons under pressure and under coexistence of methane and hydrogen.

The US—A—38 42 138 discloses a process for controlling hydrogenation. Olefins once formed in an atmosphere of hydrogen at high temperature under high pressure are deteriorated to paraffins such as ethane, methane etc. due to the ambient hydrogen.

Hydropyrolysis of hydrocarbons is further described in "J.E.C. Product Research and Development" (vol. 20, No. 4, Dec. 1981 pages 746—752).

Last the FR—A—14 94 497 stands out on the basic recognition that low pressure, decomposition in a short period of time and a diluent one effective in controlling an unavoidable reaction in the case of decomposition at high temperatures. When methane i.e. is supplied to dilute hydrogen, propylene is increased and ethylene is decreased. The disadvantages of the prior art are now explained in a more general explanation.

As is well known, a thermal cracking process which is called steam cracking has heretofore been employed to convert, into olefins, light gaseous hydrocarbons, such as ethane and propane, as well as liquid hydrocarbons such as naphtha and kerosine. According to this steam cracking, steam is employed as a heat transfer medium for prompt heating and as a diluent medium for preventing a deposition of coke and tar, and hydrocarbons are converted into olefins by a gaseous phase reaction. In the case of producing olefins by this process, as the prevention of disadvantageous side reactions is necessary, the cracking operation is carried out under a low pressure as close as possible to atmospheric pressure and under a very high dilution of steam. As for reaction conditions generally employed, the reaction temperature is 850°C or less and the residence time ranges from 0.1 to 0.5 second.

In place of this steam cracking, there have been suggested several processes where cracking is accomplished in the presence of hydrogen. A first process of this type has the feature that the thermal cracking is carried out in the atmosphere of hydrogen at atmospheric pressure, whereby the yield of ethylene is increased and simultaneously coking is restrained. In the case of this process, however, in order to separate a substantial amount of recycled hydrogen gas from the reaction gas effluent, it is required to compress the reaction gas up to a high pressure as much as 20 to 40 bars. On the ground that a large amount of power is necessary for the compression, the suggested process would be inferior economically to the above steam cracking, though being excellent in the yield of ethylene. Further, coking of gas oil and other oils heavier than it in this first process is not or only slightly prevented though coking of light oils such as naphtha and kerosine is effectively reduced.

A second process of this type comprises the step of carrying out a reaction under pressure for the purpose of overcoming the drawbacks of the first process just described. This process attempts to obtain a high yield of olefins by cracking a hydrocarbon material under the conditions where the concentration of hydrogen at the outlet of the reactor is 20% or more, the pressure is within 5 to 70 bar, the reaction temperature is 625°C or more and the residence time is 0.5 second or less. In this suggested process, pressurized hydrogen is utilized, whereby the amount of power required for compression in a separation system is reduced and the generation of coke is suppressed. Moreover, the process characteristically makes use of the fact that hydrogenation is exothermic, in order to reduce the quantity of the heat which is necessary for the maintenance of reactions and which is to be fed from outside.

A third process of the above type comprises blowing oxygen into a hydrogen stream to partially burn the hydrogen with the oxygen and to thereby raise the temperature of the hydrogen stream; injecting atomized droplets of a liquid hydrocarbon material into the high-temperature hydrogen stream to produce a reaction mixture having a temperature within the range of 800 to 1800°C; maintaining this temperature for a period of 1 to 10 milliseconds; and quenching the reaction mixture below about 600°C within as short a period of time as about 2 milliseconds or less.

These processes all, however, having the following disadvantage which is attributable to the thermal cracking in the presence of hydrogen. That is to say, the disadvantage is that valuable olefins produced by reactions are hydrogenated by the existing hydrogen resulting in conversion into methane, ethane and propane which are less valuable. The ethane and propane among these can easily be recovered to ethylene and propylene by carrying out additionally the steam cracking, but the formed methane is difficult to be converted into an olefin by economical means, and what is worse, the production of the methane involves the consumption of the worthy hydrogen. In other words, the valuable hydrogen is consumed to prepare the less valuable methane from the valuable ethylene, which leads to economically great loss, thus such processes are meaningless. Further, another serious problem, which results from the production of the methane by the hydrogenation of the olefins, is that the hydrogenation reaction is highly exothermic and the reaction temperature is accordingly raised. And since the hydrogenation reaction progresses vigorously at a high temperature, the production of the methane is accelerated more and more, and as a result, such a condition as a runaway reaction occurs. In consequence, the reduction in the ethylene and the production of the methane are brought about, so that it

becomes difficult to maintain the yield of the olefins at a high level. This tendency occurs even at ordinary temperature but is particularly noticeable in a high-pressure atmosphere of hydrogen. By this fact, the aforesaid advantage based on the employment of a high pressure is offset.

In order to suppress the production of methane due to the hydrogenation, some ways of shortening a residence time have been suggested. For example, a residence time of 100 milliseconds or so is employed in the second process, but a curtailment of the residence time to such a degree is insufficient to restrain the production of paraffins. Moreover, in the third process, the residence time is further reduced to an ultrashort residence time of 10 milliseconds or less, but in order to obtain a desired yield of olefins by reducing the residence time, it is necessary to set a reaction temperature to an ultra-high temperature of 1200°C or more. As a result of such a temperature rise, however, the production of methane is scarcely substantially restrained, and slight fluctuations in the temperature and residence time will lead to an abnormal variation in the yield of products. Accordingly, the operation of such processes is almost impossible.

An object of the present invention is thus to provide a new thermal cracking method for hydrocarbons by which olefins can be obtained in a good yield from optional materials, without fear of producing methane due to hydrogenation.

It has been found out that an atmosphere, in which a subtantial amount of methane coexists with hydrogen in a high-temperature and high-pressure condition at a temperature of 800 to 1200°C and a reaction pressure of 5 bars or more, functions extremely advantageously for the production of olefins, and the present invention has been achieved on the basis of this newly found innovative knowledge.

That is to say, the present invention intends to provide a thermal cracking method for producing olefins from hydrocarbons which comprises the steps of causing said hydrocarbons to coexist with a mixed gas of methane and hydrogen in a methane/hydrogen mol ratio of 0.2 or more prior to reaction; carrying out a thermal cracking reaction under conditions that a total concentration of said methane and hydrogen is at least 40 mol% or more at the outlet of a reactor, a partial pressure of said hydrogen is 3 bars or more, a temperature at the outlet of said reactor is within the range of 800 to 1200°C, and the residence time in said reactor is within the range of 5 to 300 milliseconds; and quenching a reaction product discharged through the outlet of said reactor.

According to the present invention, methane is added intentionally and selectively to hydrogen in an amount equal to that of the hydrogen under pressure, whereby:

(1) The production of methane due to hydrogenation can be completely prevented by controlling the concentration of hydrogen radicals with the aid of methane and by the function of produced methyl radicals ($CH_3\cdot$), resulting in maximisation of the yield of olefins.

(2) Ethane, ethylene, propylene and acetylene, which are useful as products, are produced in the presence of sufficient amount of methane and hydrogen by the decomposition of the methane, therefore yield of each of these useful components is higher as compared with the case where a large amount of methane is not added.

(3) In addition to the above effects, since methane has higher molar specific heat as compared with hydrogen, the heat capacity of a gas increases, and a runaway condition of a reaction which is inherent in a hydrogenation reaction is avoided by the aforesaid function of methane for preventing the hydrogenation reaction. As a result, the yield distribution is scarcely affected by fluctuation of reaction temperature, residence time or quenching time, so that an approximately constant yield distribution can be obtained. This feature is extremely effective in improving controlability and operability of a plant.

(4) Further, thanks to the feature of the improved operability, a special reactor is not required. Furthermore, since the cooling time can be prolonged, heat recovery to a heavy oil material increases to a substantial extent.

(5) Similarly to the conventional hydrogen atmosphere, a prevention of coking can be accomplished also to the heavy oil material. Therefore, clogging by the coking can be avoided, so that a prolonged continuous operation is possible.

(6) Since there is no fear of the preparation of methane from olefins by the hydrogenation decompositions at a high temperature and over a long period of time are allowable to heighten a yield of BTX (benzene, toluene and xylene) up to a maximum level.

To sum up, according to the present invention, the preparation of paraffins from olefins owing to the hydrogenation is restrained, therefore a decomposition temperature and a reaction time can be selected at optimum levels in compliance with a material to be cracked so as to obtain a maximum yield of ethylene, olefins (ethylene, propylene and the like) or olefins+BTX (benzene, toluene and xylene).

The thermal cracking according to the present invention will be further described in detail with reference to the accompanying drawings, in which:

Fig. 1 is a diagrammatic representation illustrating reaction channels of a thermal cracking according to the present invention;

Fig. 2 is a graph showing the relation between a percentage of residual ethylene as well as each percentage of produced ethane and methane and a reaction time in hydrogen in the absence of methane;

Fig. 3 is a graph showing the relation between a percentage of residual ethylene as well as each percentage of produced ethane and methane and a reaction time under coexistence with methane;

Fig. 4 is a graph showing the relation between a percentage of residual ethylene as well as each percentage of produced ethane and methane and a reaction time under coexistence with nitrogen;

Fig. 5 is a graph showing the relation between each percentage of residual ethylene, ethane and methane and a reaction time under coexistence with ethane;

Fig. 6 is a flow chart illustrating an embodiment according to the present invention;

Fig. 7 is a graph showing the relation between a yield of coke and a partial pressure of hydrogen;

Fig. 8 is a graph showing the relation between a yield of ethylene+ethane and a reaction time;

Fig. 9 is a graph showing the relation between a yield of ethylene+ethane and a pressure;

Fig. 10 is a graph showing the relation between each yield of ethylene+ethane, acetylene and coke and a temperature at the outlet of a reactor;

Fig. 11 is a graph showing the relation between a yield of coke and a $CH_4/H_2$ ratio; and

Fig. 12 is a graph showing the relation between a yield of ethylene+ethane and a total concentration of methane and hydrogen at the outlet of the reactor.

Fig. 1 illustrates main components and main reaction channels in the thermal cracking method according to the present invention with the intention of explaining its features from the viewpoint of reaction mechanism. In Fig. 1 the double arrows indicate reaction channels in which hydrogen performs important functions. Although, needless to say, components and reactions other than exhibited in Fig. 1 also exist, there are omitted trace components and substances such as radicals which are generated transiently and do not remain in finished products though playing important roles, and there are also omitted reaction channels regarding such components and substances. Fig. 1 principally indicates the reaction channels necessary to elucidate the function of methane in the presence of hydrogen. For the purpose of demonstrating that the method according to the present invention is effective especially for a heavy oil material which tends to be shunned on account of a low yield of olefins and a difficulty in a prolonged stable operation due to a trouble such as coking, the example in Fig. 1 takes up heavy oil as a feed material. The explanation about Fig. 1 can be likewise applied to materials other than the heavy oil, for example, LPG, naphtha, kerosine, light oil and the like, and the present invention, needless to say, is applied to these materials.

In Fig. 1, a feed hydrocarbon material (in this case, it is the heavy oil) is decomposed into methane ($CH_4$), ethylene ($C_2H_4$), propylene ($C_3H_6$) and coke through channels ①, ②, ③ and ④ by thermal cracking reactions at a first step. Then, a minor portion of the formed propylene is hydrogenated through channel ⑰ to be converted into propane ($C_3H_8$), but a major portion of the propylene is decomposed into ethylene and methane, as indicated by channel ⑤, in accordance with the following formula (1):

$$C_3H_6+H_2\rightarrow C_2H_4+CH_4 \qquad (1)$$

The ethylene produced in the above-mentioned processes, i.e. channels ② and ⑤ is converted into ethane ($C_2H_6$) and methane via channels ⑦ and ⑨ in accordance with the following formulae (2) and (3):

$$C_2H_4+H_2\rightarrow C_2H_6 \qquad (2)$$

$$C_2H_6+H_2\rightarrow 2CH_4 \qquad (3)$$

Here, when attention is paid to reactions of using methane as a starting material, channels ⑩, ⑧ and ⑥ can be presumed in which ethane, ethylene and propylene are formed in accordance with the following formulae (4), (5) and (6) reverse to the above-mentioned formulae (3), (2) and (1). Further, channels ⑬ (reaction formula (7)) and ⑫ via acetylene ($C_2H_2$) can be presumed:

$$2CH_4\rightarrow C_2H_6+H_2 \qquad (4)$$

$$C_2H_6\rightarrow C_2H_4+H_2 \qquad (5)$$

$$C_2H_4+CH_4\rightarrow C_3H_6+H_2 \qquad (6)$$

$$2CH_4\rightarrow C_2H_2+3H_2 \qquad (7)$$

Furthermore, as a channel for producing coke, condensation polymerization reaction channel ⑮ via acetylene can be presumed in addition to channel ④. These reactions in which methane is selected as a starting material are difficult to occur, unless a concentration of the methane is high.

The above-mentioned explanation is only about an embodiment of a general thermal cracking reaction. The feature of the present invention resides in the utilization of functions of the atmosphere including methane and hydrogen at a high concentration under pressure, and additional reference will be made in turn to the respective functions of hydrogen and methane in the aforementioned reaction channels.

In the first place, a discussion about the function of hydrogen will be given. As often utilized in the conventional method, a temperature and pressure are built up. The reason why such a manner is employed is that the higher the temperature and pressure, the greater the function of the hydrogenation becomes, and as a result there is prevented the generation and condensation polymerization (channel ④) of unstable polymers in a liquid phase which are, causes of a coking phenomenon. Particularly in the case of the heavy oil material, the amount of hydrogen therein is relatively lacking in comparison with carbon, therefore additional hydrogen is supplemented from outside, whereby the amount of light gas increases which is produced by decomposition reactions (channels ①, ② and ③) at the first step (an amount of the product obtained by channel ④ relatively decreases). Further, an amount of acetylene which is a

precursor for coke is decreased with the aid of reactions ⑫ and ⑭, whereby production of coke from a gaseous phase can be suppressed. However, hydrogen also has a disadvantageous function which should not be overlooked. That is to say, because of the presence of hydrogen, saturated products are liable to be generated by consuming olefins through channels ⑤, ⑦ and ⑰, especially under pressure. This phenomenon is indeed nothing but a drawback of the conventional process discussed at the beginning of this specification. In other words, in the case of the conventional process in which attention is paid only to the advantage of the pressurized hydrogen atmosphere, there is facilitated the reaction (channel ⑤) for decomposing, into methane and ethylene, propylene produced through the decomposition reactions at the first step, and undesirable side reactions (channels ⑦ and ⑨) progress in succession. Even if quenching is carried out to freeze these reactions, it would be inevitable that olefins are hydrogenated for a little cooling time, and as a result methane and ethane, inter alia, methane increases noticeably. However, the propylene and ethylene are not lost completely. This is the reason why the hydrogenation reactions in channels ⑦, ⑨ and ⑰ are merely relatively slower than the reactions in channels ②, ③ and ⑤. By way of a measure to overcome such a problem as mentioned above, in the thermal cracking method according to the present invention, not only hydrogen but also methane in an amount approximately equal to it is added to the atmosphere before start of the reactions, whereby a dramatic effect can be obtained. Behaviour of the method according to the present invention will be described in detail as follows:

The methane added to the atmosphere has the following function. That is to say, when decomposition reactions of a hydrocarbon material is started at a temperature high enough to advance them, the reactions have an inclination to proceed along channels ③, ⑤, ⑦ and ⑨ toward light and saturated components in succession, i.e. from propylene to methane through ethylene and ethane. When a sufficient amount of methane, however, is added to the reaction atmosphere, the methane is converted into ethane, ethylene, acetylene and the like along channels ⑩, ⑧, ⑬ and ⑥ which are reverse to the above-mentioned stream of from ③ to ⑨ through ⑤ to ⑦, whereby the conversion of olefins into methane due to hydrogenation can be prevented. In addition thereto, the decomposition of methane is facilitated by regulating a reaction temperature and pressure as well as a methane/hydrogen ratio in the atmosphere, so that the added methane can be converted into more valuable ethylene, ethane and acetylene. For example, in the preparation of ethylene from methane, the following reactions possible occur. At a high temperature, very active methyl radicals ($CH_3\cdot$) are produced from methane, but they change into ethane by recombination, as exhibited by reaction formula (8) below. Further, a pull reaction (channel A) of hydrogen radicals ($H\cdot$) from the ethane or a pull reaction of hydrogen atoms (channel B) occur in order to convert the ethane into ethylene via ethyl radical ($C_2H_5\cdot$) or directly.

$$2CH_3\cdot \rightarrow C_2H_6 \xrightarrow{A} C_2H_5\cdot + H\cdot, \quad C_2H_6 \xrightarrow{B} C_2H_5\cdot \xrightarrow{-H\cdot} C_2H_4 + H_2 \qquad (8)$$

Under coexistence of hydrogen and methane, the methyl radicals are produced by reaction formula (9) below.

$$CH_4 + H\cdot \rightleftarrows CH_3\cdot + H_2 \qquad (9)$$

Therefore, as be definite from reaction formula (9), in the presence of a great amount of methane, the reaction proceeds in the right direction in the formula, and thus the hydrogen radicals change into molecular hydrogen, so that concentration of the hydrogen radicals decreases and concentration of the methyl radicals increases instead. Like this, methane behaves an absorber for the hydrogen radicals, therefore it can prevent the hydrogenation reaction of olefins due to the hydrogen radicals. Further, a dehydrogenation reaction due to the hydrogen pull function of methane is facilitated, so that the production of olefins is accelerated, and simultaneously methane is converted into ethane and ethylene by the recombination of the formed methyl radicals, as mentioned above. Accordingly, methane not only serves as a diluent but also contributes drastically to an increase in yield of ethylene by a reactive mechanism as described above. It has thus been found that the aforementioned process is noticeably different in mechanism and effect from the conventional technique in which the atmosphere is diluted only with hydrogen.

Moreover, in the conventional method, reactions are exothermic because of the thermal cracking of the hydrogenation in the pressurized atmosphere of hydrogen or including hydrogen in plenty, and reaction operations are required to be carried out in a runaway system. In contrast, the thermal cracking method according to the present invention employs, as a reaction atmosphere, the atmosphere including methane and hydrogen simultaneously in sufficient amount. Therefore, the reactions involving methyl radicals predominate, and they assume endothermic aspect. Accordingly, these reactions behave as if they cooled the wall of a reactor to remove the heat therefrom, and the reaction fluid is thus quenched along with the progress of the reactions, so that no runaway reactions occur.

Also with regard to yield characteristics of the reactions, a substantially unchanged yield range (plateau range) exist in the system, irrespective of variation in a reaction time and reaction temperature. In addition to the above, since a molar specific heat of methane is about 2.5 times as

much as that of hydrogen, the reaction temperature is difficult to vary.

As described above, the effect due to the presence of a sufficient amount of methane is not foreseeable at all from each single employment of hydrogen or methane. It is a feature of the thermal cracking method according to the present invention to utilize positively this particular function of methane in this way.

Now, differences between a case where methane is added and other cases each where a gas other than methane is added will be described with reference to Figs. 2 to 5.

Fig. 2 is a graph showing a percentage of residual ethylene and the respective production percentages of ethane and methane produced by the conversion of carbons in the ethylene into other components in the case that a mixed gas comprising 10 mol% of ethylene and 90 mol% of hydrogen was allowed to react at a temperature of 1000°C and under a pressure of 24 bars. As be apparent from the graph, the ethylene decreases abruptly to be converted into ethane owing to the presence of the pressurized hydrogen, and methane is successively formed therefrom. When a reaction time passes 10 milliseconds, the ethylene is consumed as much as about 50% thereof. In contrast, Fig. 3 is a graph showing a percentage of residual ethylene and the respective preparation percentages of ethane and methane produced by the conversion of carbons in the ethylene into other components in the case that a mixed gas, which was obtained by adding methane to the previous example, comprising 10 mol% of ethylene, 45 mol% of hydrogen and 45 mol% of methane was allowed to react likewise at a temperature of 1000°C and under a pressure of 24 bars. As understood from Fig. 3, the percentage of the reacted ethylene is noticeably low at an early stage, and even when 10 milliseconds have passed, the ethylene as much as 98% remains. Even after 30 milliseconds an amount of the formed methane is very small, as compared with the system (Fig. 2) in which no methane is added. Fig. 4 is a graph showing a percentage of residual ethylene and the respective preparation percentages of ethane and methane which were produced by the conversion of carbons in the ethylene into other components in the case that a mixed gas, where nitrogen was added for comparison, comprising 10 mol% of ethylene, 45 mol% of hydrogen and 45 mol% of nitrogen was allowed to react likewise at a temperature of 1000°C and under a pressure of 24 bars. As be definite from the graph, when the partial pressure of hydrogen is low, a conversion rate of the ethylene decreases but is still much greater than an ethylene conversion rate in the methane-including system in Fig. 3. This fact indicates that the aforesaid effect of methane depends highly on the function inherent in methane itself, as described above, rather than a drop in the partial pressure of hydrogen. Fig. 5 is a graph showing the respective percentages of residual ethylene and ethane as well as a preparation percentage of methane produced by a conversion of carbons in the ethylene and ethane in the case that a mixed gas, where ethane was added in place of methane, comprising 10 mol% of ethylene, 10 mol% of ethane and 80 mol% of hydrogen was allowed to react likewise at a temperature of 1000°C and under a pressure of 24 bars.

In Fig. 5, the percentages of the residual ethylene and ethane are represented on the basis of regarding the total amount of the ethylene and ethane at an early stage as 100%.

The system regarding Fig. 5 is clearly different in a tendency of each component from the system shown in Fig. 3 in which methane is added. That is to say, in the latter system where methane is added, the reaction percentage (conversion percentage) of ethylene is outstandingly low, whereas in the former system where ethane is added in place of methane, ethylene is remarkably converted into ethane which is then converted into methane in succession.

As supported by the comparative differences between Figs. 3 and 5, added methane performs a specific effect. Moreover, in the case of Fig. 5, an amount of formed methane is extremely great rather than the case of Fig. 2, but if a steam cracking is carried out for ethane, 85% or more of the ethane is converted into ethylene, whereby the conversion percentage into methane can be inhibited below 10%. On the contrary, under coexistence with hydrogen, a great amount of ethane is disadvantageously converted into methane. The above discussed tendency is observed also when a paraffin other than methane is used, and thus the particular effect of methane, which is different from that of a paraffin other than it, can be obtained only by adding methane to hydrogen.

Fig. 6 is a flow chart explaining a first embodiment where the method according to the present invention is applied on an industrial scale. In Fig. 6, a feed hydrocarbon material is pressurized up to a predetermined pressure by means of a pump 1, and is then fed to a thermal cracking device 2 having a suitable heating zone and reaction zone. The supply of heat energy necessary to preheat a reaction fluid (a mixture of the hydrocarbon material, methane and hydrogen) in the thermal cracking device and to retain reactions is accomplished by heating the fluid from outside through a wall of the reactor, by burning partially methane and hydrogen gas alone or combinedly, before they are mixed with the reaction fluid or hydrocarbon material, or by mixing the reaction fluid with hydrogen, a steam, a plasma or the like which is previously heated by another way. In the thermal cracking device 2, thermal cracking reactions occur under the functions of hydrogen radicals and methyl radicals as mentioned above to produce the reaction fluid 10 including olefins in a major proportion therein, and immediately the fluid is fed to a quenching heat exchanger 3 to quench it therein.

As such a quenching heat exchanger 3, there may be employed, for example, a direct heat

exchanger for spraying directly water or an oil to the reaction fluid, an indirect heat exchanger for heat exchanging between two fluids inside and outside a pipe or a two-step combination of both.

Then, the quenched reaction fluid 11 is forwarded to a gas-liquid separator 4, where it is separated into a gas phase 12 and a liquid phase 13, and they are fed to a gas separating refinery 5 and a liquid separating refinery 6, respectively. In the gas separation refinery 5, the fed gas is separated into hydrogen 14, $CH_4$ 15, olefines 16 such as $C_2H_4$ and $C_3H_6$, paraffins 17 such as $C_2H_6$ and $C_3H_8$ and heavy components 18 such as $C_4$ components and heavier components. In the thermal cracking method according to the present invention, it is not always necessary to separate critically hydrogen and methane. This tolerance is economical. The separated hydrogen 14 is mixed with make-up hydrogen 23 and is pressurized again by a compressor 8 for hydrogen to be recycled for reactions. The majority of the methane 15, after a portion thereof being removed out as a product 19, is caused to pass through a line 20, and is pressurized by a compressor 9 for methane in order to be recycled for reactions. Further, another portion of the methane 15 is introduced into a steam reformer 7 through a line 21 so as to be converted into hydrogen, and the thus prepared hydrogen is fed through line 22 to a gas refinery 30, where compounds 27 such as CO and $CO_2$ are removed out, and the refined hydrogen is mixed with the recycling hydrogen 14 via a line 23.

On the other hand, in the liquid separator 6, the liquid is separated into gas components (H and $C_1$ to $C_3$) 24, $C_4$ components and various fractions 25 and residue 26. The paraffin components 17 such as ethane and propane are forwarded to a steam cracking device 31, where ethylene and propylene are recovered.

Now, the present invention will be further described in detail in accordance with the following example. It should be noted that the example merely is to explain the present invention but does not intend to restrict the same.

Example

A selected liquid hydrocarbon material was sprayed into a reactor in which methane and hydrogen were flowing at a high temperature and under a high pressure, and the resulting reaction fluid of a mixture comprising the hydrocarbon material, methane and hydrogen was guided, in the state of parallel flow, toward an outlet of the reactor. A direct quench was carried out by spraying water at the outlet, and a composition of the gas phase and an amount of formed coke were inspected.

The high-temperature and high-pressure atmosphere comprising the methane and hydrogen was prepared as follows: The hydrogen and methane were previously and separately preheated to 400 to 800°C, oxygen was then blown into the side of the methane to burn it partially and to thereby prepare heated methane. A suitable amount of the hydrogen was then mixed with the heated methane to prepare the desired atmosphere. In this case, however, when a $CH_4/H_2$ ratio was low, the side of the hydrogen was conversely burned for the acquisition of the aimed atmosphere. Needless to say, a similar effect can be obtained by burning partially a mixture of the methane and hydrogen which has been previously prepared. A reaction time was determined by calculation, taking a volume of the used reactor and reaction conditions into consideration. The employed hydrocarbon material was a reduced pressure residual oil (specific gravity 1.02, sulfur content 4.3% and flow-point 40°C) from the Middle East.

The used reactor has a burning area, at an upper portion thereof, where methane was partially burned with oxygen; a hydrogen-feeding orifice under the burning area; an asphalt burner on an inner wall of the reactor itself; an outlet for a reaction product at a lower position of the reactor itself; and a directly connected cooling portion under the outlet.

Figs. 7 to 12 exhibit the relations between reaction conditions and various yields. Fig. 7 is a graph showing the relation between a partial pressure of hydrogen and yield of coke in the case that the vacuum residual oil from the Middle East and kerosine were cracked at 950°C and in a $CH_4/H_2$ mol ratio of 1 or less, and *a* and *b* in the drawing represent results regarding the vacuum residual oil and the kerosine, respectively. As be apparent from this drawing, an amount of the formed coke decreases remarkably by increasing the partial pressure of the hydrogen, and if the partial pressure is maintained at a level of 3 to 5 bars or more, the yield of the coke can be suppressed down to an extremely low level. For a comparison with the heavy oil, Fig. 7 further exhibits a case where kerosine as a light oil was used, and also in this case, the formation of coke is suppressed by increasing the partial pressure of the hydrogen. However, it is definite therefrom that an effect of this partial pressure is greater to the heavy oil. Incidentally, when the vacuum residual oil was cracked in hydrogen at ordinary pressure, the formed coke clogged the reactor instantaneously.

Fig. 8 is a graph showing the relation between a yield of ethylene+ethane and a reaction time in accordance with methane/hydrogen mol ratios as parameters in the case that the reduced pressure residual oil from the Middle East was cracked at 950°C at the outlet of the reactor under 20 bars and under coexistence of methane and hydrogen. As be apparent from the graph, as the proportion of the methane increases, the yield of the ethylene+ethane is raised and the variation of the obtained yield to the reaction time is small, which means that the distribution of the yields is stabilized. The proportion of the ethylene which is occupied in the yield of the ethylene+ethane is 70 to 80% when the methane/hydrogen mol ratio is 1. These results indicate that the yield of the ethylene will be 32 to 35% if the methane/

hydrogen mol ratio is set to 0.2 or more, which yield is higher as compared with a yield of the ethylene of 14 to 15% in the case of hydrogen only ($CH_4/H_2=0$), and the fluctuation of the yield to the reaction time can be noticeably improved. Further, it is understood from this graph that the selectable reaction time ranges as extensive as 5 to 300 milliseconds.

Fig. 9 is a graph showing the relation between a pressure and a yield of ethylene+ethane in the case that the reduced pressure residual oil from the Middle East was cracked at a temperature of 950°C at the outlet of the reactor for a reaction time of 20 milliseconds in a methane/hydrogen mol ratio of 1 and 0 (hydrogen only). As be definite from the graph, the influence of the pressure on the yield of the ethylene+ethane is scarcely observed when the $CH_4/H_2$ ratio is 1, but in the system where no methane is added, the ethylene and ethane are abruptly converted into methane with the increase in the pressure, so that the yield of the ethylene+ethane lowers remarkably.

Fig. 10 is a graph showing an influence of a temperature at the outlet of the reactor in the case that the reduced pressure residual oil from the Middle East was cracked under a reaction pressure of 20 bars for a reaction time of 20 milliseconds in a methane/hydrogen mol ratio of 1 and 0 (hydrogen only). In this graph, the solid lines represent systems where methane is added, and a dotted line represents a system where no methane is added.

As be definite from the drawing, a yield of ethylene+ethane in the system where methane is added does not vary so much at a temperature of 800 to 1200°C at the outlet of the reactor. Below 800°C, however, the reaction rate drops noticeably, therefore the yield of the ethylene+ethane also falls sharply. On the other hand, on the side of a higher temperature, acetylene is produced by a dehydrogenation of the ethylene and a decomposition of methane, and when the temperature exceeds 1200°C, a preparation of the acetylene is remarkable and the yield of the ethylene+ethane drops sharply. In consequence, the production of coke increases, which fact would be attributable to the polycondensation of the acetylene. On the other hand, in the system where no methane is added, a hydrogenation of the ethylene and ethane progresses abruptly with temperature rise, so that the yield of the ethylene+ethane lowers sharply. The difference between the two systems is based on the addition of methane.

Fig. 11 is a graph showing the relation between a methane/hydrogen mol ratio and a yield of coke in the case that the reduced pressure residual oil from the Middle East was cracked under a partial pressure of hydrogen of 10 bars at a temperature of 950°C at the outlet of the reactor for a reaction time of 20 milliseconds. As the proportion of added methane to hydrogen increases, a yield of the coke increases as the proportion of the added methane augments, even under conditions of a constant partial pressure of the hydrogen. An increase in the yield of the coke depends greatly on the temperature and pressure, but in order to inhibit the preparation of the coke, when the reaction temperature is within the range of 900 to 1000°C and the partial pressure of the hydrogen is 10 bars or so, the methane/hydrogen mol ratio is preferably 4 or less.

Fig. 12 is a graph showing the relation between a total concentration of methane and hydrogen at the outlet of the reactor and a yield of ethylene+ethane in the case that the reduced pressure residual oil from the Middle East was cracked at a temperature of 950°C at the outlet of the reactor under a reaction pressure of 20 bars for a reaction time of 20 milliseconds under conditions of methane/hydrogen mol ratios being 1, 0.5 and 0 (hydrogen only). In this case, water vapor is added as a residual gas to regulate the concentration of the methane and hydrogen. Fig. 12 clearly indicates that the yield of the ethylene+ethane is enough if only the total concentration of the membrane and hydrogen is 40 mol% or more. Incidentally, the results set forth in Figs. 7 to 11 are on the basis of the conditions that the total concentration of methane and hydrogen is 60 mol% or more.

Judging from the example described above, the respective ranges to make the present invention effective are as follows: First, with regard to the reaction pressure, for a prevention of coking, a suitable partial pressure of hydrogen is 3 bars, preferably 5 bars or more. With regard to the proportion of methane to be added, when a methane/hydrogen ratio is 0.2 (mol/mol) or less, an effect of the methane is small, and on the other hand, when it is 4 (mol/mol) or more, a yield of coke is great even if a partial pressure of hydrogen is maintained at 3 bars or more. Therefore, a suitable methane/hydrogen ratio is 0.2 to 4, preferably 0.5 to 4 (mol/mol). Further, it should be noted that when a total concentration of methane and hydrogen in a reaction atmosphere is low, an effect of the added methane is insufficient. In order to obtain a satisfactory effect of the methane and hydrogen, a suitable total concentration of both is 40 mol% or more at the reaction outlet, preferably 60 mol% or more. With regard to a residence time of reactions, for acquisition of a good yield of olefins, it is within the range of 5 to 300 milliseconds, preferably 10 to 100 milliseconds. Moreover, a reaction temperature is preferably within 800 to 1200°C.

According to the present invention, there can hence be provided an industrially useful thermal cracking method for producing olefins from hydrocarbons in a good yield and with a reduced amount of coke.

## Claims

1. A thermal cracking method for producing olefins from hydrocarbons which comprises the steps of causing said hydrocarbons to coexist with a mixed gas of methane and hydrogen and

quenching a reaction product discharged through the outlet of said reactor, characterized by a methane/hydrogen mol ratio of 0.2 or more prior to reaction, carrying out the thermal cracking reaction under conditions that a total concentration of said methane and hydrogen is at least 40 mol% or more at the outlet of a reactor, a partial pressure of said hydrogen is 3 bars or more, a temperature at the outlet of said reactor is within the range of 800 to 1200°C, and a residence time in said reactor is within the range of 5 to 300 milliseconds.

2. A thermal cracking method according to claim 1 wherein said methane/hydrogen mol ratio is within the range of 0.2 to 4.

3. A thermal cracking method according to claim 1 wherein said partial pressure of the hydrogen is 5 bars or more.

4. A thermal cracking method according to claim 1 wherein said residence time in the reactor is within the range of 10 to 100 milliseconds.

**Patentansprüche**

1. Thermisches Spaltverfahren zur Herstellung von Olefinen aus Kohlenwasserstoffen, wobei die Kohlenwasserstoffe gleichzeitig mit einem Mischgas aus Methan und Wasserstoff vorhanden sind und die durch den Auslaß des Reaktors abgegebenen Reaktionsprodukte abgekühlt werden, dadurch gekennzeichnet, daß das Methan/Wasserstoff Molverhältnis vor der Reaktion 0,2 oder mehr beträgt, daß die thermische Spaltung unter solchen Bedingungen durchgeführt wird, daß die Gesamtkonzentration an Methan und Wasserstoff am Auslaß des Reaktors wenigstens 40 Mol % oder mehr, der Partialdruck des Wasserstoffes 3 bar oder mehr beträgt und daß die Temperatur am Auslaß des Reaktors in einem Bereich von 800 bis 1200°C und die Verweilzeit im Reaktor in einem Bereich von 5 bis 300 Millisekunden liegt.

2. Thermisches Spaltverfahren nach Anspruch 1, dadurch gekennzeichnet, daß das Methan/Wasserstoff Molverhältnis im Bereich von 0,2 bis 4 liegt.

3. Thermisches Spaltverfahren nach Anspruch 1, dadurch gekennzeichnet, daß der Partialdruck des Wasserstoffs 5 bar oder mehr beträgt.

4. Thermisches Spaltverfahren nach Anspruch 1, dadurch gekennzeichnet, daß die Verweilzeit im Reaktor im Bereich von 10 bis 100 Millisekunden liegt.

**Revendications**

1. Procédé de craquage thermique pour produire des oléfines à partir d'hydrocarbures qui comprend les étapes consistant à faire coexister lesdits hydrocarbures avec un gaz mélangé de méthane et d'hydrogène et à refroidir un produit de réaction déchargé à travers la sortie du réacteur, caractérisé par un rapport molaire méthane/hydrogène de 0,2 ou plus avant la réaction, la mise en oeuvre de la réaction de craquage thermique dans des conditions telles que la concentration totale desdits méthane et hydrogène est d'au moins 40% en mole ou plus à la sortie du réacteur, la pression partielle de l'hydrogène est de 3 bars ou plus, la température à la sortie du réacteur est comprise entre 800 et 1200°C, et le temps de séjour dans ledit réacteur est compris entre 5 et 300 millisecondes.

2. Procédé de craquage thermique selon la revendication 1, dans lequel ledit rapport molaire méthane/hydrogène est compris entre 0,2 et 4.

3. Procédé de craquage thermique selon la revendication 1, dans lequel ladite pression partielle d'hydrogène est de 5 bars ou plus.

4. Procédé de craquage thermique selon la revendication 1, dans lequel ledit temps de séjour dans le réacteur est compris entre 10 et 100 millisecondes.

FIG.1

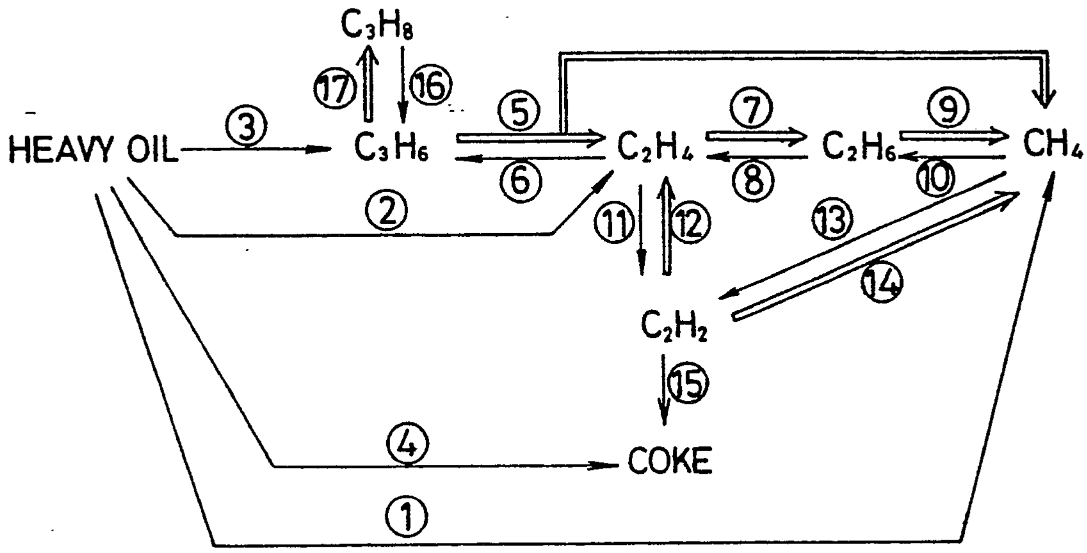
C3H8
17
16
HEAVY OIL
3
C3H6
5
6
C2H4
7
8
C2H6
9
10
CH4
2
11
12
13
14
C2H2
15
4
COKE
1

FIG.2

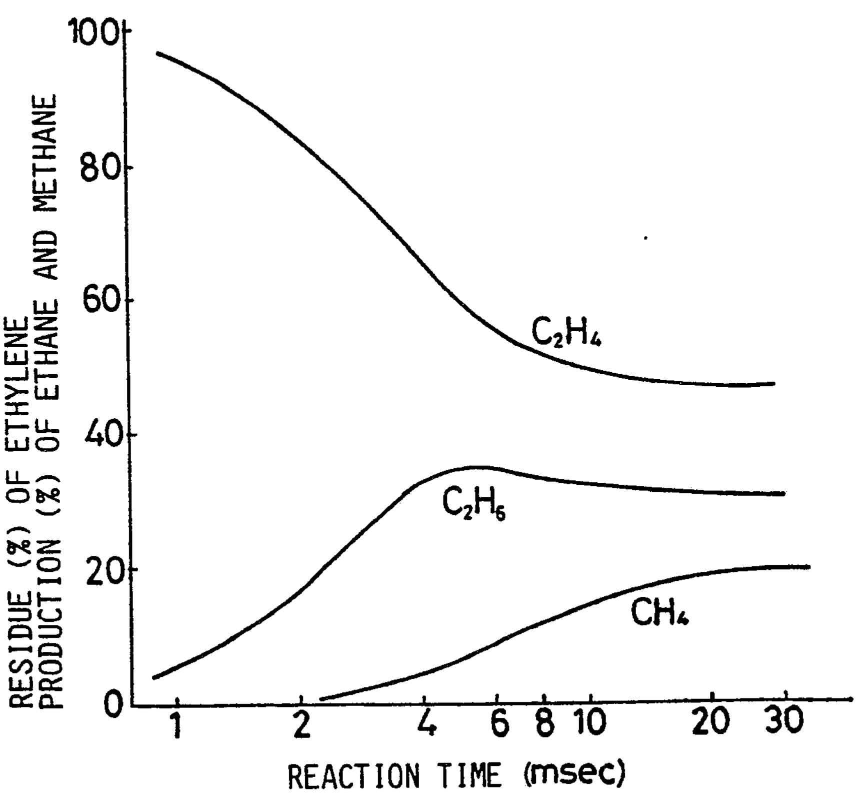
100
80
60
40
20
0
RESIDUE (%) OF ETHYLENE
PRODUCTION (%) OF ETHANE AND METHANE
C2H4
C2H6
CH4
1
2
4
6
8
10
20
30
REACTION TIME (msec)

FIG.3

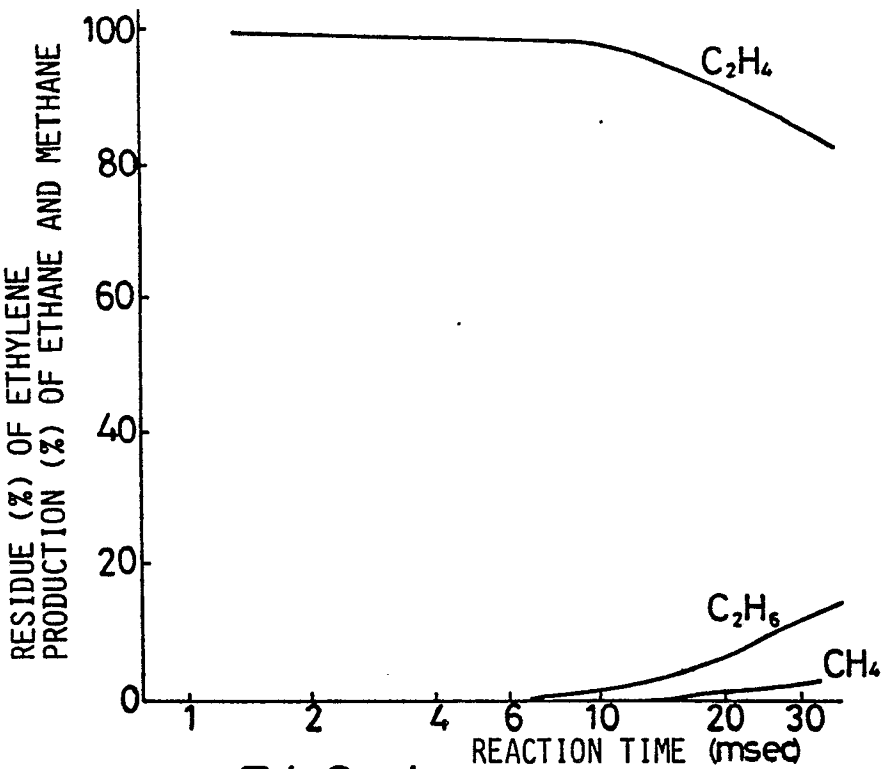
RESIDUE (%) OF ETHYLENE
PRODUCTION (%) OF ETHANE AND METHANE
100
80
60
40
20
0
$C_2H_4$
$C_2H_6$
$CH_4$
1
2
4
6
10
20
30
REACTION TIME (msec)

FIG.4

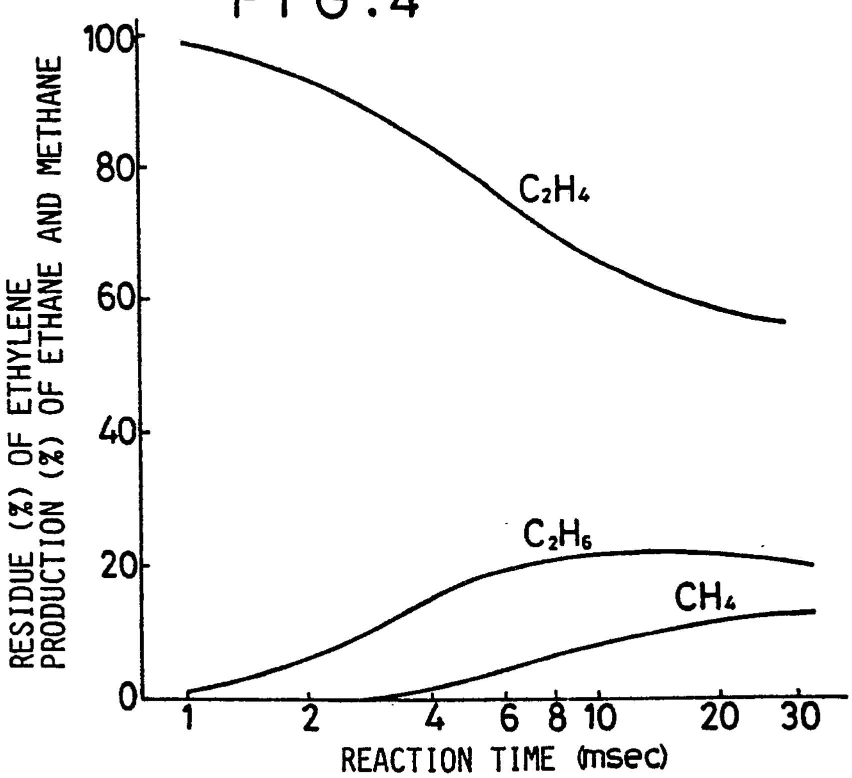
RESIDUE (%) OF ETHYLENE
PRODUCTION (%) OF ETHANE AND METHANE
100
80
60
40
20
0
$C_2H_4$
$C_2H_6$
$CH_4$
1
2
4
6
8
10
20
30
REACTION TIME (msec)

FIG.5

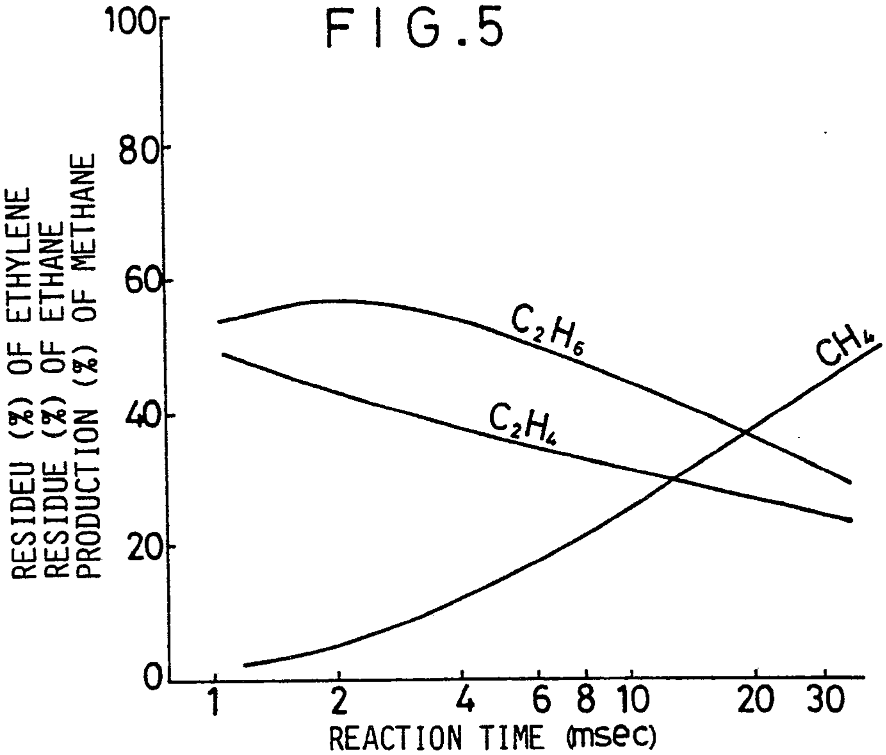
100
80
60
40
20
0
RESIDEU (%) OF ETHYLENE
RESIDUE (%) OF ETHANE
PRODUCTION (%) OF METHANE
C2H6
C2H4
CH4
1
2
4
6
8
10
20
30
REACTION TIME (msec)

FIG.6

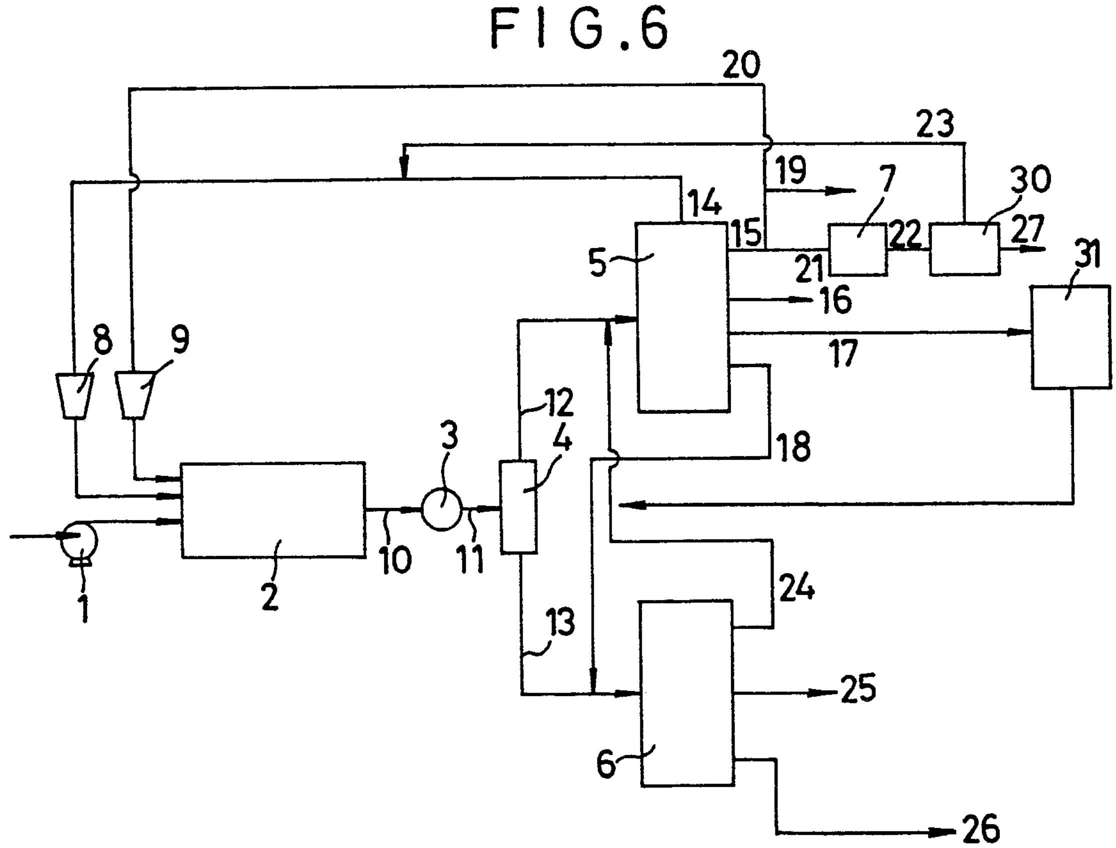
20
23
19
7
30
14
15
22
27
5
21
31
16
8
9
17
12
3
4
18
1
2
10
11
24
13
25
6
26

FIG.7

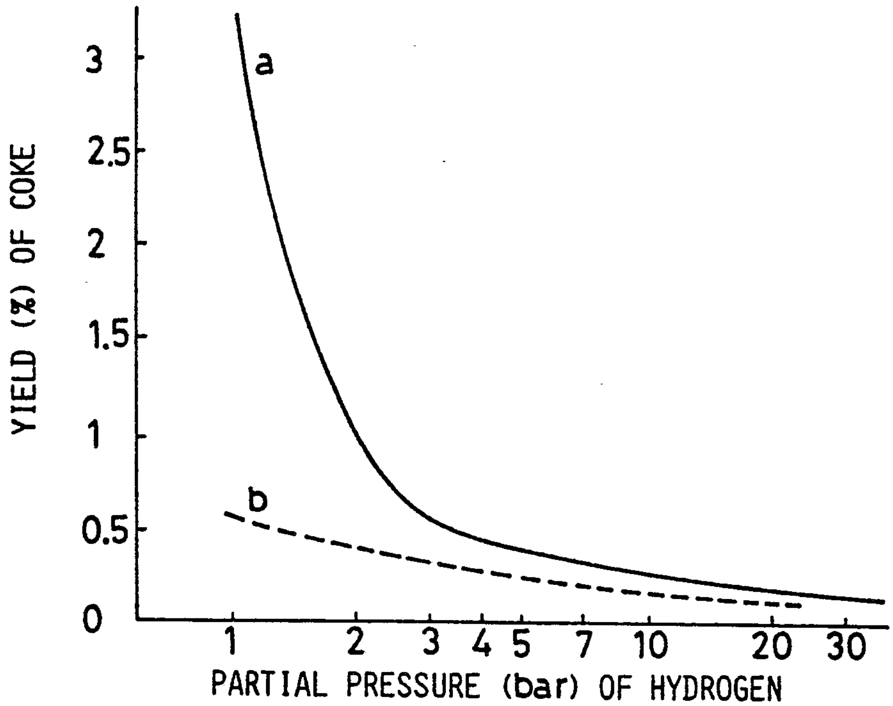
a
b
YIELD (%) OF COKE
3
2.5
2
1.5
1
0.5
0
1
2
3
4
5
7
10
20
30
PARTIAL PRESSURE (bar) OF HYDROGEN

FIG.8

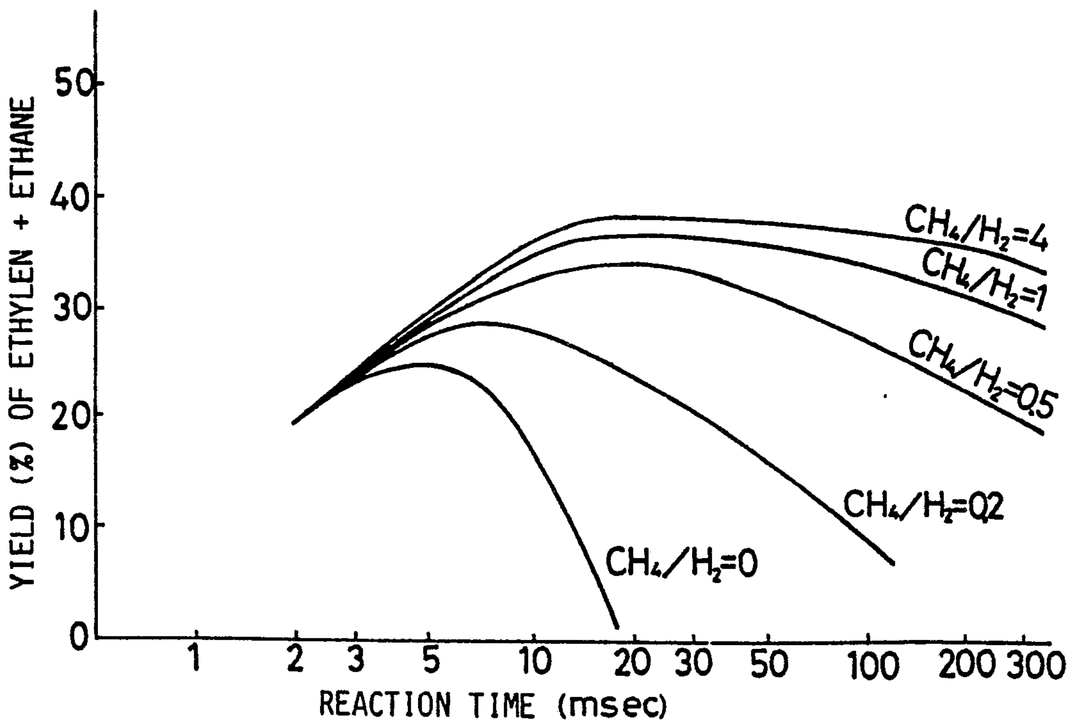
YIELD (%) OF ETHYLEN + ETHANE
50
40
30
20
10
0
CH4/H2=4
CH4/H2=1
CH4/H2=0.5
CH4/H2=0.2
CH4/H2=0
1
2
3
5
10
20
30
50
100
200
300
REACTION TIME (msec)

FIG.9

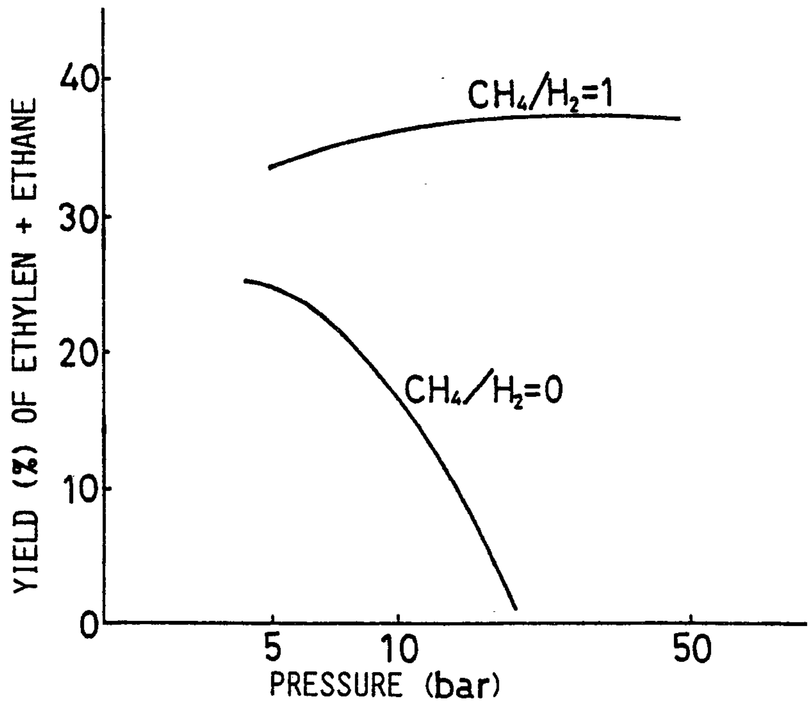
CH4/H2=1
CH4/H2=0
YIELD (%) OF ETHYLEN + ETHANE
40
30
20
10
0
5
10
50
PRESSURE (bar)

FIG.10

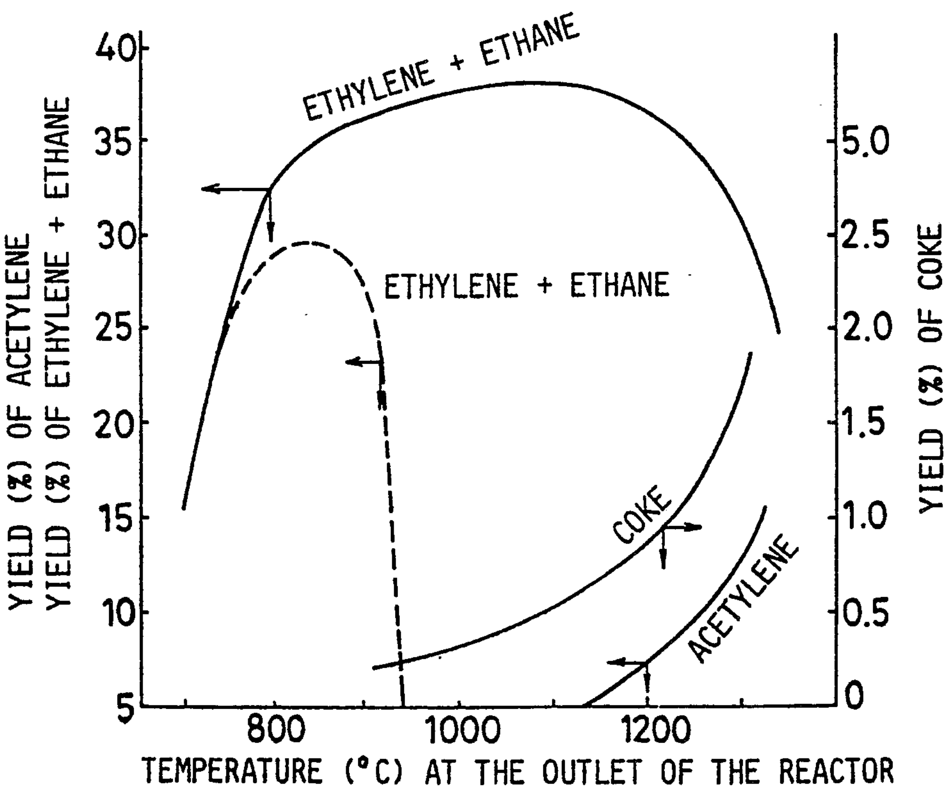
ETHYLENE + ETHANE
ETHYLENE + ETHANE
COKE
ACETYLENE
YIELD (%) OF ACETYLENE
YIELD (%) OF ETHYLENE + ETHANE
YIELD (%) OF COKE
40
35
30
25
20
15
10
5
5.0
2.5
2.0
1.5
1.0
0.5
0
800
1000
1200
TEMPERATURE (°C) AT THE OUTLET OF THE REACTOR

FIG.11

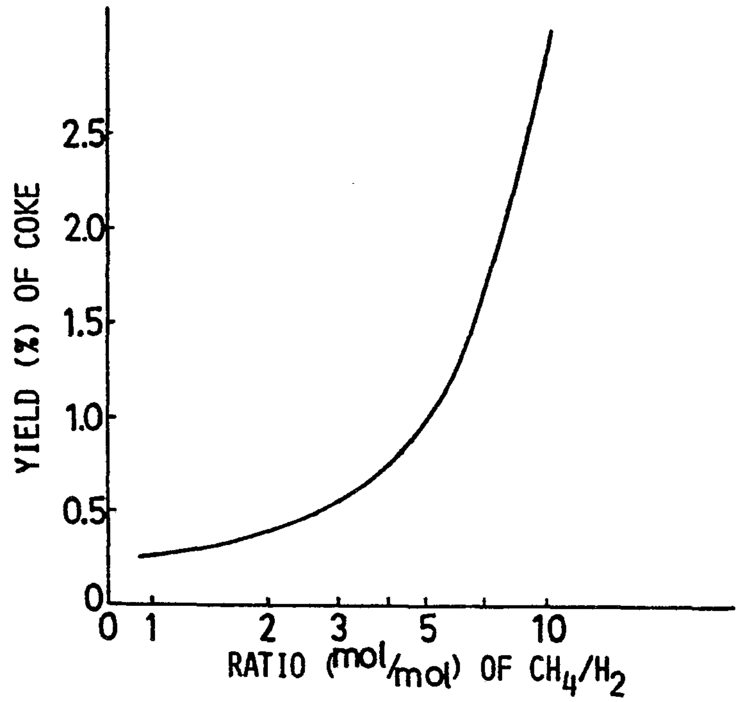
YIELD (%) OF COKE
2.5
2.0
1.5
1.0
0.5
0
0
1
2
3
5
10
RATIO (mol/mol) OF $CH_4/H_2$

FIG.12

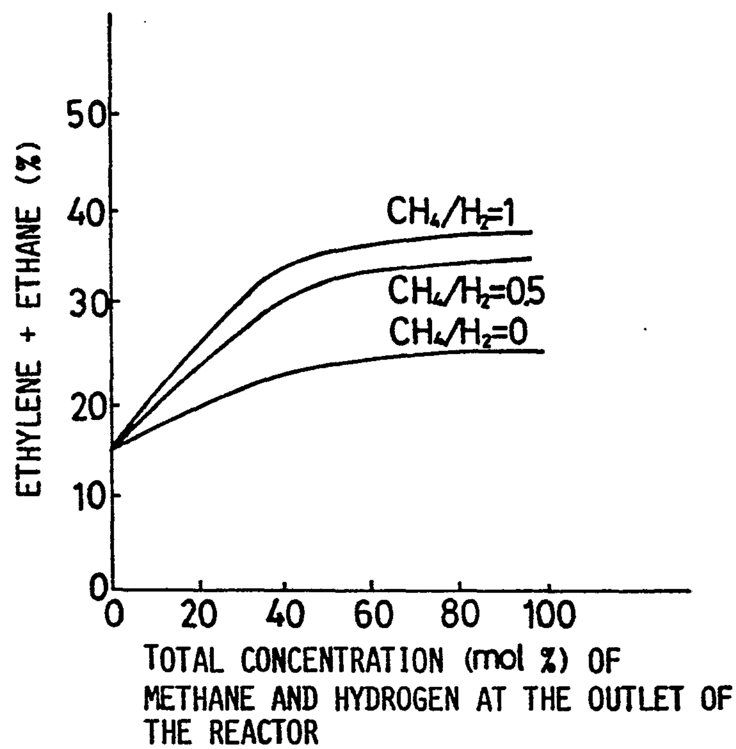
ETHYLENE + ETHANE (%)
50
40
30
20
10
0
$CH_4/H_2$=1
$CH_4/H_2$=0.5
$CH_4/H_2$=0
0
20
40
60
80
100
TOTAL CONCENTRATION (mol %) OF
METHANE AND HYDROGEN AT THE OUTLET OF
THE REACTOR